(19) Europäisches Patentamt
European Patent Office
Office européen des brevets

(11) **EP 0 668 157 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.[7]: **B32B 27/32**, B65D 65/40

(21) Anmeldenummer: **95101921.5**

(22) Anmeldetag: **13.02.1995**

(54) **Siegelbare polyolefinische Mehrschichtfolie, Verfahren zu ihrer Herstellung und ihre Verwendung**

Heat-sealable polyolefin multilayer films, method of their manufacture and use

Films stratifiés thermosoudables en polyoléfines, procédé pour leur fabrication et leur utilisation

(84) Benannte Vertragsstaaten:
**BE DE ES FR GB IT NL**

(30) Priorität: **21.02.1994 DE 4405429**
**03.03.1994 DE 4406931**

(43) Veröffentlichungstag der Anmeldung:
**23.08.1995 Patentblatt 1995/34**

(73) Patentinhaber: **Basell Polyolefine GmbH**
**50389 Wesseling (DE)**

(72) Erfinder:
- **Dries, Thomas, Dr.**
  **D-55270 Schwabenheim (DE)**
- **Spaleck, Walter, Dr.**
  **D-65835 Liederbach (DE)**
- **Winter, Andreas, Dr.**
  **D-61479 Glashütten (DE)**

(56) Entgegenhaltungen:
**EP-A- 0 318 049**
**EP-A- 0 484 817**
**EP-A- 0 516 018**
**EP-A- 0 549 900**
**EP-A- 0 580 377**
**US-A- 5 206 075**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine siegelbare Mehrschichtfolie aus einer polyolefinischen Basisschicht und mindestens einer Deckschicht.

Die Erfindung betrifft ferner ein Verfahren zur Herstellung der siegelbaren Mehrschichtfolie sowie ihre Verwendung.

Polyolefinfolien haben in der Vergangenheit als Verpackungsfolien breite Anwendung gefunden. Der Erfolg dieser Materialien beruht auf den guten optischen und mechanischen Eigenschaften sowie auf der einfachen Verschweißbarkeit der Folien. Das einfache "Schweiß"-Verfahren zum Verschließen von Folienverpakkungen erfordert eine Heizvorrichtung, z. B. in Form eines Glühdrahtes, welche mit den Folienlagen in Kontakt gebracht wird und zum völligen Erweichen dieser Folienlagen führt. Beim Abkühlen des aufgeschmolzenen Bereiches bildet sich die sogenannte Schweißnaht. Zur Erzielung einer guten Verschweißung ist es erforderlich, daß die in der Schweißnaht aufeinandergepreßten Oberflächen die Temperatur des Kristallitschmelzpunktes des verwendeten Polyolefins erreichen.

Neben dem Verschweißen hat das Siegeln von Folien zunehmend an Bedeutung gewonnen. Dabei werden die Folienlagen übereinandergelegt und nur 10 bis 20 °C unter den Kristallitschmelzpunkt erwärmt, d. h. die Folien werden nicht vollständig aufgeschmolzen. Die erzielte Haftung ist wesentlich geringer als beim Verschweißen des gleichen Materials, jedoch für viele Anwendungen ausreichend (Kunststoff-Handbuch, Band IV, Carl Hanser Verlag München, 1969, Seiten 623 bis 640).

In der Literatur sind mehrschichtige Folien bekannt, die mit Siegelschichten aus statistischen Co- oder Terpolymerisaten aus Propylen und anderen $\alpha$-Olefinen oder entsprechenden Polymerblends versehen sind.

Diese Siegelschichten ermöglichen die Verwendung der Folien auf modernen Verpackungsmaschinen. Die Laufgeschwindigkeiten dieser Maschinen wurden in der Vergangenheit ständig erhöht, wodurch auch die Anforderungen an die Folieneigenschaften immer höher werden. Insbesondere sind die Siegel- und Hot-Tack-Eigenschaften der Folie besonders kritisch, da bei kürzeren Siegelzeiten die Festigkeit der Siegelnaht nicht beeinträchtigt werden darf. Die Folie muß bei hohen Geschwindigkeiten gut über die Maschine laufen und darf nicht verblocken oder im Bereich der Siegelzone mit den Siegelbacken oder anderen Maschinenteilen verkleben.

Weiterhin sollen Verpackungsfolien gut zu bedrucken und gut zu metallisieren sein. Zusätzliche Anforderungen ergeben sich aus den neuen EG-Richtlinien für Lebensmittelverpackungen, welche die Migration von im Rohstoff enthaltenen Oligomeren bzw. Additiven betreffen. Letztlich besteht grundsätzlich das Bedürfnis, Verpackungsfolien so preiswert wie möglich herzustellen.

Diese vielfältigen Anforderungen an Siegelmaterialien führten in der Vergangenheit immer wieder zu neuen verbesserten Siegelrohstoffen wie beispielsweise Ethylen- und/oder Propylenco- und -terpolymeren.

Es ist beispielsweise bekannt, die Siegelanspringtemperatur durch eine Erhöhung des Comonomergehalts zu reduzieren. Dies ist jedoch aus mehreren Gründen technisch aufwendig und teuer.

1. Mit der Erhöhung des Comonomergehalts, insbesondere des $C_2$-Gehalts, wächst die Wahrscheinlichkeit für den blockartigen Einbau des Ethylens. Auf der anderen Seite tragen zum überwiegenden Teil nur die statistisch eingebauten Comonomeren zur Erniedrigung der Siegelanspringtemperatur bei.

2. Hohe eingebaute Comonomergehalte erfordern ein hohes Comonomerangebot im Polymerisationsreaktor, was sich nicht in jeder Polymerisationstechnologie kostengünstig realisieren läßt.

3. Statistische Copolymere mit hohem Comonomergehalt, insbesondere C2-Gehalt, zeigen eine starke Klebeneigung bedingt durch zwangsläufig während der Polymerisation entstehende niedermolekulare Anteile. Diese führen zu Belagbildung im Polymerisationsreaktor und müssen in einem zweiten Verfahrensschritt mittels Lösemittelextraktion entfernt werden. Beides verteuert das Produkt zusätzlich.

Die DE-A-16 94 694 beschreibt heißsiegelbare Schichtstoffe aus einer Polypropylengrundfolie mit einer darauf festhaftenden heißsiegelbaren thermoplastischen Schicht. Diese Schicht besteht aus einem Mischpolymerisat aus 98 bis 94 Gew.-% Propylen und 2 bis 6 Gew.-% Ethylen. Die beschriebene Folie hat eine gegenüber Polypropylenfolien und auch gegenüber bekannten Siegelbeschichtungen wie PE, PVC oder PVA bedeutend verbesserte Heißsiegelbarkeit. Die Siegelanspringtemperatur dieser Heißsiegelschichten liegt nach den Beispielen bei über 126 °C.

Die EP-A-0 318 049 beschreibt kristalline Copolymere des Propylens mit Ethylen und/oder $\alpha$-Olefinen, die 2 bis 10 Mol-% Ethylen und/oder $\alpha$-Olefine enthalten. Der Schmelzpunkt dieser Copolymeren liegt im Bereich von 110 bis 140 °C. Die Löslichkeit in Xylol beträgt bei 25 °C weniger als 10 Gew.-%, und die intrinsische Viskosität in Tetralin bei 135 °C ist höher als 0,2 dl/g. Die Copolymeren weisen verbesserte mechanische Eigenschaften und verbesserte Schweißbarkeit auf und sind daher für die Herstellung von Folien geeignet.

Die EP-A-0 484 817 beschreibt eine Propylenfolie mit Deckschichten aus syndiotaktischem Polypropylen.

Diese Folien sollen ein ausgewogenes Eigenschaftsspektrum aufweisen, insbesondere gute Siegeleigenschaften und gute optische Eigenschaften, jedoch treten beim Verstrecken dieses Materials gehäuft Probleme, beispielsweise durch Rißbildung in den syndiotaktischen Deckschichten oder durch Delaminierung der Deckschichten von der isotaktischen Kernschicht, auf. Die genannten Probleme beruhen zum einen auf der schlechteren Streckbarkeit von syndiotaktischem Polypropylen und zum anderen auf der geringeren Verträglichkeit von syndiotaktischem und isotaktischem Polypropylen.

Die US 5,206,075 beschreibt heißsiegelbare Mehrschichtfolien mit einer polyolefinischen Basisschicht und mindestens einer heißsiegelbaren Deckschicht, wobei die Deckschicht ein Ethylen-alpha-Monoolefin-Copolymer mit einem Comonomergehalt im Bereich von 4 bis 15 mol-% ist, das mittels Metallocenkatalysatoren hergestellt wurde.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die sich durch eine Kombination der folgenden Eigenschaften auszeichnet:

- einen hohen Glanz
- eine niedrige Trübung
- eine niedrige Siegelanspringtemperatur
- gute Siegelnahtfestigkeit
- gute Hot-Tack-Eigenschaften
- niedrige Migrationswerte
- gute Coronahaltbarkeit
- niedrige Herstellungskosten

Die der Erfindung zugrundeliegende Aufgabe wird gelöst durch eine Mehrschichtfolie der eingangs genannten Gattung, deren kennzeichnendes Merkmal darin besteht, daß die Deckschicht ein Propylen-Olefin-Copolymer enthält, welches mittels zu isotaktischen Polypropylenen führenden Metallocenkatalysatoren hergestellt ist, daß das Copolymer ein statistisches Copolymer ist, daß das Verhältnis von Blockanteil zu statistischem Anteil des Copolymeren, gemessen als Randomfaktor mittels IR, im Bereich von 0,01 bis 0,4 liegt und daß der statistische Comonomergehalt des Copolymeren, gemessen mittels IR, 0,05 bis 12 Gew.-% beträgt.

Je nach ihrem vorgesehenen Verwendungszweck kann die jeweilige Ausführungsform der Folie transparent, opak, weiß oder weiß-opak sein.

Die Basisschicht der erfindungsgemäßen Mehrschichtfolie enthält im wesentlichen ein Polyolefin, vorzugsweise ein Propylenpolymer, und gegebenenfalls weitere zugesetzte Additive in jeweils wirksamen Mengen. Im allgemeinen enthält die Basisschicht mindestens 50 Gew.-%, vorzugsweise 75 bis 100 Gew.-%, insbesondere 90 bis 100 Gew.-%, des Propylenpolymeren.

Das Propylenpolymere enthält im allgemeinen 90 bis 100 Gew.-%, vorzugsweise 95 bis 100 Gew.-%, insbesondere 98 bis 100 Gew.-%, Propylen und besitzt im allgemeinen einen Schmelzpunkt von 120 °C oder höher, vorzugsweise 150 bis 170 °C und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Die Basisschicht kann für opake, weiße oder weiß-opake Folien zusätzlich bis zu 40 Gew.-%, vorzugsweise bis zu 30 Gew.-%, bezogen auf das Gesamtgewicht der Basisschicht, inertes partikelförmiges Material mit einem mittleren Teilchendurchmesser im Bereich von 0,01 bis 8 µm, vorzugsweise von 0,02 bis 2,5 µm, enthalten. Die Anwesenheit des inerten partikelförmigen Materials mit einer Teilchengröße von 1 bis 8 µm bewirkt, daß sich bei der Streckorientierung der Folie bei geeigneten Temperaturen zwischen der Polymermatrix und dem inerten Material Mikrorisse und Mikrohohlräume, sogenannte Voids, ausbilden, im Bereich derer das sichtbare Licht gebrochen wird. Die Folie erhält dadurch ein opakes Aussehen, was sie für bestimmte Verpackungszwecke, insbesondere auf dem Lebensmittelsektor, besonders geeignet macht. Das inerte partikelförmige Material kann anorganischer oder organischer Natur sein. Bei anorganischem Material sind Calciumcarbonat, Aluminiumsilikat, Siliziumdioxid oder Titandioxid, bei organischem Material Polyethylenterephthalat, Polybutylenterephthalat, Polyester, Polyamide, Polystyrole besonders geeignet, wobei auch die Kombination von verschiedenen anorganischen und/oder organischen Partikeln möglich ist.

Die Modifizierung der Basisschicht in der angegebenen Weise ist an sich bekannt und wird durchgeführt wie in der DE-A-43 11 422 beschrieben, auf welche hiermit ausdrücklich Bezug genommen wird. Dort werden Teilchenarten, deren eingesetzte Menge, Modifizierung durch Beschichtung etc. im einzelnen beschrieben.

Weiterhin kann die Kernschicht in einer bevorzugten Ausführungsform Harze und/oder Antistatika enthalten. Die entsprechenden Harze und Antistatika werden nachstehend zusammen mit weiteren Additiven beschrieben.

Die erfindungsgemäße Mehrschichtfolie umfaßt gegebenenfalls (eine) weitere zwischen der Basis- und der Deckschicht aufgebrachte Zwischenschicht/en. Diese gegebenenfalls vorhandene/n Zwischenschicht/en enthält/enthalten im wesentlichen Propylenpolymere oder Polypropylenmischungen, wie sie vorstehend für die Basisschicht beschrieben wurden. Grundsätzlich können die Basisschicht und die Zwischenschicht/en aus gleichen oder verschiedenen Propylenpolymeren bzw. Mischungen aufgebaut sein. Die Schmelzflußindices der Polymeren für die Kern- und Zwischenschicht/en sind bevorzugt möglichst gleich groß. Gegebenenfalls kann der MFI der Zwischenschicht/en etwas höher liegen, wobei eine Differenz von 20 % nicht überschritten werden soll. Gegebenenfalls können den Zwischenschichten Additive in jeweils wirksamen Mengen zugesetzt werden.

In einer weiteren vorteilhaften Ausführungsform werden die in der Basisund/oder Zwischenschicht eingesetzten Propylenpolymeren durch den Zusatz von organischen Peroxiden teilabgebaut. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymers vor dem Zusatz des organischen Peroxids
$MFI_2$ = Schmelzflußindex des peroxidisch abgebauten Propylenpolymeren

Erfindungsgemäß liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Deckschicht der erfindungsgemäßen Mehrschichtfolie enthält ein statistisches Propylen-Olefin-Copolymer, welches mittels Metallocen-Katalysatoren hergestellt ist und der Folie eine hervorragend niedrige Siegelanspringtemperatur in Verbindung mit weiteren sehr guten Folieneigenschaften verleiht. Insbesondere zeichnet sich die Folie mit der erfindungsgemässen Siegelschicht durch eine verbesserte, d. h. niedrigere, Trübung und eine überraschend gute Coronahaltbarkeit aus. Die Globalmigration der Folie ist ebenfalls deutlich verbessert.

Das Copolymere wird durch Copolymerisation des Propylens mit einem Olefin, vorzugsweise 1-Olefin, insbesondere Ethylen, hergestellt, wobei die Polymerisation in Gegenwart eines Katalysators aus einem Metallocen im allgemeinen in Verbindung mit einem Cokatalysator durchgeführt wird. Die Herstellung dieser Copolymeren selbst ist jedoch nicht Gegenstand der vorliegenden Erfindung. Die entsprechenden Verfahren sind bereits in EP-A-0 302 424, EP-A-0 336 128 und EP-A-0 336 127 beschrieben, auf welche hier ausdrücklich Bezug genommen wird (dort sind auch die als Comonomere einsetzbaren Olefine genannt).

a) Katalysator

Als Katalysatoren zur Herstellung der Copolymeren sind im Prinzip alle Metallocen-Katalysatoren geeignet, mit denen man auch isotaktisches Polypropylen von technisch relevanter Molmasse (Mw > 100 000 g/mol) bei technisch relevanten Prozeßtemperaturen (>40 °C) herstellen kann. Es kann sich hierbei um geträgerte oder homogen eingesetzte Metallocene handeln. Als Cokatalysatoren kommen Aluminoxane oder andere voluminöse, nicht koordinierende Anionen in Frage, des weiteren kann es vorteilhaft sein, Aluminiumtrialkyle dem Polymerisationssystem zuzusetzen. Besonders geeignet sind Metallocene der nachstehenden Formel. Diese Metallocene sind u. a. in EP-A-0 485 823, EP-A-0 530 647, EP-A-0 545 303, EP-A-0 545 304, EP-A-0 549 900 und EP-A-0 576 970 beschrieben. Besonders geeignete Metallocen-Trägerungen sind z. B. in EP-A-0 567 952 beschrieben. Bevorzugt sind Metallocene, die als Liganden substituierte oder unsubstituierte Indenylgruppen tragen, welche über eine heteroatomhaltige Brücke ($M^1$) miteinander verbunden sind. Besonders bevorzugt sind Metallocene der Formel

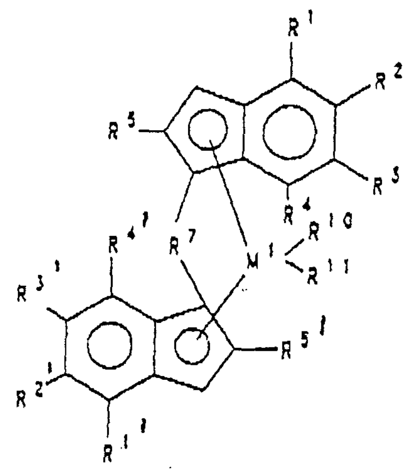

worin

$M^1$ Titan, Zirkon, Hafnium, Vanadium, Niob oder Tantal ist,

$R^1$, $R^2$, $R^3$, $R^4$ und $R^5$ sowie $R^{1'}$, $R^{2'}$, $R^{3'}$, $R^{4'}$ und $R^{5'}$ gleich oder verschieden sind und

Wasserstoff, $(C_1\text{-}C_{20})$Alkyl, $(C_6\text{-}C_{14})$Aryl, $(C_1\text{-}C_{10})$Alkoxy, $(C_2\text{-}C_{10})$Alkenyl, $(C_7\text{-}C_{20})$Arylalkyl, $(C_7\text{-}C_{20})$Alkylaryl, $(C_6\text{-}C_{10})$Aryloxy, $(C_1\text{-}C_{10})$Fluoralkyl, $(C_6\text{-}C_{10})$Halogenaryl, $(C_2\text{-}C_{10})$Alkinyl, einen Rest $-SiR^6_3$, wobei $R^6$ für $(C_1\text{-}C_{10})$Alkyl steht, ein Halogenatom oder einen heteroaromatischen Rest mit 5 oder 6 Ringgliedern, der ein oder mehrere Heteroatome enthalten kann, bedeuten, oder zumindest zwei benachbarte Reste $R^1$-$R^4$ bzw. $R^{1'}$-$R^{4'}$ bilden mit den sie verbindenden Atomen ein Ringsystem,

$R^7$ ein Rest

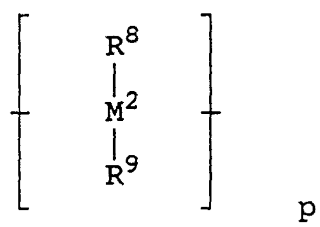

ist,

wobei

$M^2$ Silicium, Germanium oder Zinn bedeutet,

$R^8$ und $R^9$ gleich oder verschieden sind und Wasserstoff, $(C_1\text{-}C_{20})$Alkyl, $(C_6\text{-}C_{14})$Aryl, $(C_1\text{-}C_{10})$Alkoxy, $(C_2\text{-}C_{10})$Alkenyl, $(C_7\text{-}C_{20})$Arylalkyl, $(C_7\text{-}C_{20})$Alkylaryl, $(C_6\text{-}C_{10})$Aryloxy, $(C_1\text{-}C_{10})$Fluoralkyl, $(C_6\text{-}C_{10})$Halogenaryl, $(C_2\text{-}C_{10})$Alkinyl oder Halogen bedeuten, oder $R^8$ und $R^9$ zusammen mit dem sie verbindenden Atom einen Ring bilden, p 0, 1, 2 oder 3 ist und $R^{10}$ und $R^{11}$ gleich oder verschieden sind und Wasserstoff, $(C_1\text{-}C_{10})$Alkyl, $(C_1\text{-}C_{10})$Alkoxy, $(C_6\text{-}C_{10})$Aryl, $(C_6\text{-}C_{10})$Aryloxy, $(C_2\text{-}C_{10})$Alkenyl, $(C_7\text{-}C_{40})$Arylalkyl, $(C_7\text{-}C_{40})$Alkylaryl, $(C_8\text{-}C_{40})$Arylalkenyl, Hydroxy oder ein Halogenatom bedeuten.

b) Polymerisationsverfahren

Zur Herstellung der Copolymeren sind alle bekannten Verfahrensvarianten zur Herstellung von Polypropylen geeignet, d. h. Massepolymerisation von flüssigem Propylen, Gasphasen polymerisation, Suspensionspolymerisation oder Lösungspolymerisation in einem inerten Verdünnungsmittel und Hochdruckpolymerisation in überkritischem Propylen, jeweils in ein- oder mehrstufiger, diskontinuierlicher oder kontinuierlicher Verfahrensausführung. Die wählbaren Prozeßbedingungen können zwischen 2 und 2 000 bar Druck und 40 und 250 °C liegen. Als Comonomere können in diesem Polymerisationsverfahren Ethylen oder andere 1-Olefine wie 1-Buten, 1-Hexen, 1-Octen, 1-Decen usw. sowie 4-Methylpenten-1 verwendet werden, wobei Ethylen besonders bevorzugt ist.

Der Comonomeranteil, insbesondere der Ethylenanteil während der Polymerisation, liegt zwischen 0,1 und 15 Gew.-%, vorzugsweise zwischen 1 und 7 Gew.-%, insbesondere zwischen 2 und 6 Gew.-%, jeweils bezogen

auf das Gewicht der Mischung aus Propylen und Ethylen. Dieser Comonomergehalt wird durch Verwendung der neuen Katalysatorsysteme überwiegend statistisch eingebaut, so daß das Copolymer ein sehr niedriges Verhältnis von Blockanteil zum statistischen Anteil aufweist. Das Verhältnis liegt im allgemeinen unter 0,4, vorzugsweise im Bereich von 0,05 bis 0,3, insbesondere im Bereich von 0,05 bis 0,2.

Des weiteren liegt eine besonders enge Verteilung der Einbaurate in den einzelnen Polymerketten vor. Im Falle prochiraler Comonomerer werden diese stereospezifisch eingebaut. Art und Häufigkeit des Auftretens von Baufehlern sind charakteristisch für diese statistischen Copolymeren und unterscheiden sich von denen bisher beschriebener Produkte. Die neuartigen Merkmale auf der Ebene der Polymerketten sind vermutlich die Ursache für die überraschenden guten Eigenschaften des Copolymeren bezüglich seiner Verwendung als Siegelrohstoff. Diese charakteristischen molekularen Merkmale sind dann besonders ausgeprägt, wenn die auf Seite 9, Zeilen 3 ff., genannten besonders geeigneten Metallocene zur Herstellung des Copolymers eingesetzt werden.

Weitere zur Kennzeichnung des Copolymeren geeignete Parameter sind in der nachstehenden Tabelle 1 zusammengefaßt.

TABELLE 1

| | Bereich | bevorzugter Bereich | besonders bevorzugter Bereich |
|---|---|---|---|
| Randomfaktor nach IR [Gew.-%] | 0,01-0,4 | 0,05-0,3 | 0,05-0,2 |
| statistischer Comonomergehalt nach IR [Gew.-%] | 0,05-12 | 1-7 | 2-6 |
| mittlere Molmasse $M_w$ [g/mol] (Gewichtsmittel) | $5 \cdot 10^4$-$2 \cdot 10^6$ | $1 \cdot 10^5$-$1 \cdot 10^6$ | $2 \cdot 10^5$-$5 \cdot 10^5$ |
| mittlere Molmasse $M_n$ [g/mol] (Zahlenmittel) | $5 \cdot 10^4$-$10^6$ | $5 \cdot 10^4$-$5 \cdot 10^5$ | $10^5$-$5 \cdot 10^5$ |
| Molmassen-Dispersität $M_w/M_n$ | <7 | <5 | <3 |
| Schmelzpunkt nach DSC [°C] | 100-140 | 110-135 | 120-130 |
| Schmelzflußindex MFI nach DIN 53 735 [g/10 min] | 0,5-100 | 1-50 | 3-15 |
| Viskositätszahl VZ [$cm^3/g$] | 50-1 000 | 100-500 | 120-300 |
| Hexan-extrahierbarer Anteil nach FDA [Gew.-%] | <3 | <2 | <1 |

Die siegelfähigen Copolymeren werden vorteilhaft durch die Angabe von mindestens zwei in der vorstehenden Tabelle 1 genannten Parameter charakterisiert, beispielsweise durch den Schmelzpunkt und einen weiteren Parameter oder durch den statistischen Comonomergehalt und einen weiteren Parameter. Vorteilhaft ist die Angabe von Schmelzpunkt, Schmelzflußindex und/oder Molmassendispersität ($M_w/M_n$).

Die Verwendung der mittels Metallocen-Katalysatoren hergestellten Copolymeren als Siegelschichtrohstoff bietet gegenüber konventionellen Siegelrohstoffen überraschende Vorteile.

1. Die Herstellkosten für siegelfähige Folien sind geringer, da sich die Copolymeren mittels Metallocen-Katalysator preiswerter als herkömmliche marktübliche Co- und Terpolymere herstellen lassen. Diese niedrigeren Herstellungskosten ergeben sich dadurch, daß ein geringerer Comonomergehalt zur Erzielung einer vergleichbaren Siegelanspringtemperatur (im Vergleich zum Stand der Technik) notwendig ist, und dadurch, daß sich die Copolymeren mit Metallocen-Katalysatoren mit einer hinreichend engen Molekulargewichtsverteilung herstellen lassen, ohne daß nachträglich ein kostenintensiver peroxidischer Abbau des Copolymeren notwendig ist.

2. Die erfindungsgemäßen Folien zeichnen sich durch niedrige extrahierbare Anteile (Hexan FDA 1771520) sowie durch eine geringere Globalmigration aus, weshalb sie für den Einsatz als Lebensmittelverpackung besonders geeignet sind.

3. Die erfindungsgemäßen Folien zeigen eine sehr gute Coronaakzeptanz und -haltbarkeit; die Schädigung der thermischen Siegeleigenschaften durch die Coronabehandlung ist gering. Darüber hinaus ist die Haftung von Druckfarben, Metallschichten, z. B. Al, und aufgedampften, keramischen Schichten wie z. B. aus $Al_2O_3$ und $SiO_x$

sehr gut.

4. Die optischen Eigenschaften Glanz und Trübung der erfindungsgemäßen Folien sind verbessert, was ein ansprechendes Erscheinungsbild der Verpackung zur Folge hat.

Die erfindungsgemäße Folie ist mindestens zweischichtig und umfaßt als wesentliche Schichten immer die Basisschicht und zumindest eine erfindungsgemäße Deckschicht, vorzugsweise beidseitig Deckschichten. Gegebenenfalls können zwischen Basis- und Deckschicht/en zusätzliche Zwischenschichten angeordnet sein. Die Auswahl der Anzahl der Schichten hängt in erster Linie von dem vorgesehenen Einsatzzweck ab, wobei drei-, vier- und fünfschichtige Ausführungsformen besonders bevorzugt sind.

Die Gesamtdicke der Folie kann innerhalb weiter Grenzen variieren und richtet sich nach dem beabsichtigten Verwendungszweck.

Die bevorzugten Ausführungsformen der erfindungsgemäßen Folie haben Gesamtdicken von 5 bis 200 μm, wobei 10 bis 100 μm, insbesondere 20 bis 80 μm, bevorzugt sind.

Die Dicke der gegebenenfalls vorhandenen Zwischenschicht/en beträgt jeweils unabhängig voneinander 2 bis 12 μm, wobei Zwischenschichtdicken von 3 bis 8 μm, insbesondere 3 bis 6 μm, bevorzugt sind. Die angegebenen Werte beziehen sich jeweils auf eine Zwischenschicht.

Die Dicke der erfindungsgemäßen Deckschicht/en wird unabhängig von anderen Schichten gewählt und liegt bevorzugt im Bereich von 0,1 bis 10 μm, insbesondere 0,3 bis 5 μm, vorzugsweise 0,5 bis 2 μm, wobei beidseitig aufgebrachte Deckschichten bezüglich Dicke und Zusammensetzung gleich oder verschieden sein können.

Die Dicke der Basisschicht ergibt sich entsprechend aus der Differenz von Gesamtdicke und der Dicke der aufgebrachten Deck- und Zwischenschicht/en und kann daher analog der Gesamtdicke innerhalb weiter Grenzen variieren.

Um bestimmte Eigenschaften der erfindungsgemäßen Polypropylenfolie noch weiter zu verbessern, können sowohl die Basisschicht als auch die Zwischenschicht/en und die Deckschicht/en Zusätze in einer jeweils wirksamen Menge enthalten, vorzugsweise Kohlenwasserstoffharz und/oder Antistatika und/oder Antiblockmittel und/oder Gleitmittel und/oder Stabilisatoren und/oder Neutralisationsmittel, die mit den Polymeren der Kernschicht und der Deckschicht/en verträglich sind, mit Ausnahme der in der Regel unverträglichen Antiblockmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Ein niedermolekulares Harz wird bevorzugt der/den Basis- und/oder Zwischenschicht/en zugesetzt. Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Der Anteil des Harzes liegt in einem Bereich von 1 bis 30 Gew.-%, vorzugsweise 2 bis 10 Gew.-%. Der Erweichungspunkt des Harzes liegt zwischen 100 und 180 °C (gemessen nach DIN 1995-U4, entspricht ASTM E-28), vorzugsweise über 120 bis 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in UIlmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt

von jeweils oberhalb 135 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in den Zwischenschichten eingesetzt.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 $mm^2/s$.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als500 g/molbevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Die Antiblockmittel werden bevorzugt den Deckschichten zugesetzt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanamin-formaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 μm, insbesondere 2 und 5 μm, wobei Teilchen mit einer kugelförmigen Gestalt, wie in der EP-A-0 236 945 und der DE-A-38 01 535 beschrieben, besonders geeignet sind.

Neutralisationsmittel sind vorzugsweise Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 $m^2/g$.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gegebenenfalls biaxial gestreckt (orientiert), die gegebenenfalls biaxial gestreckte Folie thermofixiert und gegebenenfalls an der zur Coronabehandlung vorgesehenen Oberflächenschicht entsprechend flammbehandelt wird.

Die biaxiale Streckung (Orientierung) ist bevorzugt und kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Vorzugsweise wird die so erhaltene Folie dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 lang bei einer Temperatur von 110 bis 130 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Darüber hinaus wird die Längsstreckung vorteilhafterweise bei einer Temperatur von weniger als 140 °C, vorzugsweise im Bereich von 125 bis 135 °C, und die Querstreckung bei einer Temperatur größer 140 °C, vorzugsweise bei 145 bis 160 °C, durchgeführt.

Gegebenenfalls kann/können wie oben erwähnt nach der biaxialen Streckung eine oder beide Oberfläche/n der Folie nach einer der bekannten Methoden corona- oder flammbehandelt werden, wobei für eine Flammbehandlung mit polarisierter Flamme (vgl. US-A-4,622,237) eine elektrische Gleichspannung zwischen einem Brenner (negativer Pol) und einer Kühlwalze angelegt wird. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die erfindungsgemäße Mehrschichtfolie zeichnet sich durch sehr gute Siegeleigenschaften, insbesondere durch eine sehr niedrige Siegelanspringtemperatur bei vergleichsweise niedrigen Comonomergehalten und eine gute Siegelnahtfestigkeit und gute Hot-Tack-Eigenschaften aus. Die Siegeleigenschaften von besonders vorteilhaften Ausführungsformen der Folie werden vorteilhaft durch die Angabe der folgenden Gleichung charakterisiert, die die Siegelanspringtemperatur der nicht coronabehandelten Folienseite in Abhängigkeit vom statistischen Ethylengehalt ($C_2$ in Gew.-%) charakterisiert:

$$MST \leq To - D \bullet C_2$$

wobei To = 120 °C; D = 3 °C und $0,1 \leq C_2 \leq 10$

Aus dieser Gleichung geht hervor, daß niedrige Siegelanspringtemperaturen auch bei einem sehr geringen Ethylengehalt im Copolymeren erzielt werden können. Gegebenenfalls kann bei Erhöhung des Ethylengehalts die Siegelanspringtemperatur noch weiter gesenkt werden und dabei Werte erreichen, die für $C_2/C_3$-Copolymere äußerst niedrig sind.

Gleichzeitig ermöglicht die neue Deckschicht höhere Glanzwerte, und die nachteilige, durch Beschichtung mit üblichen siegelfähigen Co- oder Terpolymeren verursachte Trübung läßt sich vorteilhafter reduzieren, es sei denn man verwendet eine opake Ausführungsform. Das neue Deckschichtmaterial ermöglicht die Herstellung von siegelfähigen Folien mit längerer Coronahaltbarkeit und mit niedriger Globalmigration, wobei die bekannten Nachteile der üblichen Deckschichtmaterialien aus Co- oder Terpolymeren vermieden werden (hoher Preis, Beeinträchtigung von Glanz und Transparenz, verfahrenstechnische Aspekte usw.).

Die Erfindung wird nunmehr durch Ausführungsbeispiele näher erläutert:

A. <u>Herstellung der Copolymeren:</u>

**Beispiel 1**

a) Katalysator:

Das Metallocen rac-Dimethylsilandiylbis(2-methyl-4,5-benzoindenyl)zirkondichlorid, hergestellt nach EP-A-0 549 900, Beispiel A, wird analog der Vorschrift in EP-A-0 567 952, Beispiel 10, in einen Trägerkatalysator überführt.

b) Polymerisation:

Ein trockener 70 $dm^3$-Reaktor wurde zunächst mit Stickstoff und anschließend mit Propylen gespült und mit 40 $dm^3$ flüssigem Propylen befüllt. Unter Rühren wurden dann 100 $cm^3$ einer Lösung von 20 Gew.-% Triisobutylaluminium in Hexan (Witco GmbH) zugesetzt, der Reaktor auf 30 °C aufgeheizt und 60 g Ethylen eindosiert. Man gab dann 2 160 mg Trägerkatalysator gemäß a) zu und erhöhte die Temperatur des Reaktors innerhalb 10 min auf 60 °C. Innerhalb der nächsten 120 min wurden weitere 140 g Ethylen kontinuierlich eindosiert und die Temperatur des Systems unter Rühren bei 60 °C gehalten. Dann wurde die Reaktion durch Zusatz von 10 $cm^3$ Isopropanol abgebrochen, das Propylen abgegast und das entstandene Polymerpulver entnommen und getrocknet. Man erhielt 4,7 kg Produkt, MFI (bestimmt bei 230 °C und 21,6 N) = 7,3 g/10 min, Ethylengehalt nach IR 3,3 Gew.-%.

c) Granulierung:
5 nach Vorschrift b) durchgeführte Ansätze wurden vereinigt, mit 0,2 Gew.-% ®Hostanox PAR 24, 0,1 Gew.-% ®Irganox 1010 und 0,05 Gew.-% Calciumstearat stabilisiert und nach Zugabe von 0,3 Gew.-% ®Sylobloc 44 granuliert. Das erhaltene Granulat hatte einen MFI 230/2,16 = 6,0 g/10 min, einen Schmelzpunkt von 128,2 °C und einen Ethylengehalt nach IR von 3,0 Gew.-%.

**Beispiel 2**

Die Herstellung des Copolymeren erfolgte analog Beispiel 1.

a) Katalysator:
Der Katalysator wurde genauso wie in Beispiel 1 beschrieben hergestellt.

b) Polymerisation:
Die Polymerisation wurde so wie in Beispiel 1 beschrieben durchgeführt, wobei jedoch anstelle von 140 g Ethylen 250 g Ethylen unter den angegebenen Bedingungen, d. h. innerhalb von 120 min und bei 60 °C, eindosiert wurden. Man erhielt 4,8 kg Produkt mit einem MFI von 9,9 g/10 min (bestimmt bei 230 °C und 21,6 N) und mit einem Ethylengehalt nach IR von 5,0 Gew.-%, bezogen auf das Gewicht des Polymeren.

c) Granulierung:
Die Granulierung wurde genau so wie in Beispiel 1 beschrieben durchgeführt. Das erhaltene Granulat hatte einen MFI von 9,0 g/10 min, einen Schmelzpunkt von 123,9 °C und einen Ethylengehalt nach IR von 5,0 Gew.-%.

**Beispiel 3**

Die Herstellung des Copolymeren erfolgte analog Beispiel 1.

a) Katalysator:
Der Katalysator wurde genauso wie in Beispiel 1 beschrieben hergestellt.

b) Polymerisation:
Die Polymerisation wurde so wie in Beispiel 1 beschrieben durchgeführt, wobei jedoch anstelle von 140 g Ethylen 300 g Ethylen unter den angegebenen Bedingungen, d. h. innerhalb von 120 min und bei 60 °C, eindosiert wurden. Man erhielt 4,5 kg Produkt mit einem MFI von 2,8 g/10 min (bestimmt bei 230 °C und 21,6 N) und mit einem Ethylengehalt nach IR von 5,6 Gew.-%, bezogen auf das Gewicht des Polymeren.

c) Granulierung:
Die Granulierung wurde genau so wie in Beispiel 1 beschrieben durchgeführt. Das erhaltene Granulat hatte einen MFI von 19,0 g/10 min, einen Schmelzpunkt von 121,6 °C und einen Ethylengehalt nach IR von 5,3 Gew.-%.

**Beispiel 4**

Die Herstellung des Copolymeren erfolgte analog Beispiel 1

a) Katalysator:
Das Metallocen rac-Dimethylsilandiylbis(2-methyl-4-phenylindenylzirkondichlorid, hergestellt nach EP-A-0 576 970, Beispiel A, wird analog der Vorschrift in EP-A-0 567 952, Beispiel 10, in einen Trägerkatalysator überführt.

b) Polymerisation:
Die Polymerisation wurde so wie in Beispiel 1 beschrieben durchgeführt, wobei jedoch anstelle von 2 160 mg nur 1 240 mg Trägerkatalysator gemäß a) zugegeben wurde. Die anschließende Temperaturerhöhung auf 60 °C innerhalb von 10 min erfolgte analog wie in Beispiel 1 beschrieben. Darüber hinaus wurde anstelle von 140 g Ethylen 330 g Ethylen unter den angegebenen Bedingungen, d. h. innerhalb von 120 min und bei 60 °C, eindosiert wurden. Man erhielt 5,2 kg Produkt mit einem MFI von 12,1 g/10 min (bestimmt bei 230 °C und 21,6 N) und mit einem Ethylengehalt nach IR von 6,1 Gew.-%, bezogen auf das Gewicht des Polymeren.

c) Granulierung:
Die Granulierung wurde genau so wie in Beispiel 1 beschrieben durchgeführt. Das erhaltene Granulat hatte

einen MFI von 11,0 g/10 min, einen Schmelzpunkt von 128,2 °C und einen Ethylengehalt nach IR von 6,0 Gew.-%.

**Beispiel 5**

Die Herstellung des Copolymeren erfolgte analog Beispiel 1.

a) Katalysator:
Der Katalysator wurde genauso wie in Beispiel 1 beschrieben hergestellt.

b) Polymerisation:
Die Polymerisation wurde so wie in Beispiel 1 beschrieben durchgeführt, wobei jedoch zunächst anstelle von 60 g Ethylenvorlage 2 $dm^3$ 1-Buten als Vorlage eindosiert wurden, und anstelle von 140 g Ethylen wurden 2 $dm^3$ 1-Buten unter den angegebenen Bedingungen, d. h. innerhalb von 120 min und bei 60 °C, eindosiert. Man erhielt 4,5 kg Produkt mit einem MFI von 7,0 g/10 min (bestimmt bei 230 °C und 21,6 N) und mit einem Butengehalt nach IR von 8,7 Gew.-%, bezogen auf das Gewicht des Polymeren.

c) Granulierung:
Die Granulierung wurde genau so wie in Beispiel 1 beschrieben durchgeführt. Das erhaltene Granulat hatte einen MFI von 6,4 g/10 min, einen Schmelzpunkt von 132 °C und einen Butengehalt nach IR von 9,0 Gew.-%.

**Beispiel 6**

Die Herstellung des Copolymeren erfolgte analog Beispiel 1.

a) Katalysator:
Der Katalysator wurde genauso wie in Beispiel 1 beschrieben hergestellt.

b) Polymerisation:
Die Polymerisation wurde so wie in Beispiel 1 beschrieben durchgeführt, wobei jedoch zunächst anstelle von 60 g Ethylenvorlage 1,25 $dm^3$ 1-Hexen als Vorlage eindosiert wurden, und anstelle von 140 g Ethylen wurden 1,25 $dm^3$ 1-Hexen unter den angegebenen Bedingungen, d. h. innerhalb von 120 min und bei 60 °C, eindosiert. Man erhielt 4,85 kg Produkt mit einem MFI von 3,9 g/10 min (bestimmt bei 230 °C und 21,6 N) und mit einem Hexengehalt nach IR von 3,2 Gew.-%, bezogen auf das Gewicht des Polymeren.

c) Granulierung:
Die Granulierung wurde genau so wie in Beispiel 1 beschrieben durchgeführt. Das erhaltene Granulat hatte einen MFI von 4,3 g/10 min, einen Schmelzpunkt von 129 °C und einen Hexengehalt nach IR von 3,0 Gew.-%.

B. Herstellung der Folie

**Beispiele**

Es wurde durch Coextrusion und anschließende stufenweise Orientierung in Längs- und Querrichtung eine dreischichtige boPP-Folie mit einer Gesamtdicke von 20 µm und einem ABA-Schichtaufbau hergestellt, d. h. die Basisschicht B war beidseitig von zwei Deckschichten vom Typ A umgeben. Vor der Aufrollung wurde die Folie auf der Abzugswalzenseite mit einer Dosisleistung von 15 $Wmin/m^2$ coronabehandelt. Die Oberflächenspannung betrug auf dieser Seite infolge der Coronabehandlung 50 mN/m.
Alle Schichten enthielten zur Stabilisierung 0,1 Gew.-% Pentaerythrithyltetrakis-4-(3,5-ditertiärbutyl-4-hydroxyphenyl)-propionat (®Irganox 1010) und als Neutralisationsmittel 0,05 Gew.-% Calciumstearat.
Die Basisschicht bestand im wesentlichen aus einem Propylenhomopolymeren mit einem n-heptanlöslichen Anteil von 3,5 Gew.-% und einem Schmelzpunkt von 162 °C. Der Schmelzflußindex des Propylenhomopolymeren betrug 3,3 g/10 min bei 230 °C und 21,6 N Belastung (DIN 53 735).
Die polyolefinischen Deckschichten A bestanden im wesentlichen aus den Granulatmischungen der Beispiele 1 bis 6. Die Deckschicht A enthielt daher 0,3 Gew.-% des Antiblockmittels ®Sylobloc 44 mit einem mittleren Teilchendurchmesser von 4 µm. Die Dicke der Deckschichten A betrug 1,1 µm.

**Vergleichsbeispiel 1**

Es wurde analog den Beispielen eine dreischichtige boPP-Folie hergestellt. Die polyolefinischen Deckschichten A bestanden im wesentlichen aus einem statistischen Copolymeren mit einem $C_2$-Gehalt von 3 bis 4 Gew.-% und einem Schmelzpunkt von 135 °C. Der Schmelzflußindex des Copolymeren betrug 7 g/10 min, gemessen bei 230 °C und 21,6 N Belastung (DIN 53 735). Analog zu Beispiel 1 enthielt auch das statistische Copolymer 0,3 Gew.-% des Antiblockmittels ®Sylobloc 44 mit einem mittleren Teilchendurchmesser von 4 µm. Die Dicke der Deckschichten betrug 1,0 µm.

**Vergleichsbeispiel 2**

Es wurde analog den Beispielen eine dreischichtige boPP-Folie hergestellt. Die polyolefinischen Deckschichten A bestanden im wesentlichen aus einem statistischen $C_2$-$C_3$-$C_4$-Terpolymeren ($C_2$-Gehalt 1,5 bis 2,5 Gew.-% $C_4$-Gehalt 7 bis 10 Gew.-%) mit einem Schmelzpunkt von ca. 133 °C. Der Schmelzflußindex des Terpolymeren betrug 6 g/10 min, gemessen bei 230 °C und 21,6 N Belastung (DIN 53 735). Analog zu Vergleichsbeispiel 1 enthielt das statistische Terpolymer 0,3 Gew.-% des Antiblockmittels ®Sylobloc 44 mit einem mittleren Teilchendurchmesser von 4 µm. Die Dicke der Deckschichten betrug 1,1 µm.

Die Eigenschaften der Folien sowie deren Aufbau und Zusammensetzung sind in den Tabellen 2 bis 14 zusammengestellt.

Zur Charakterisierung der Rohstoffe und der Folien wurden die folgenden Meßmethoden benutzt:

Mittleres Molekulargewicht und Molmassen-Dispersität

Die mittleren Molmassen ($M_w$,$M_n$) und die mittlere Molmassen-Dispersität ($M_w$/$M_n$) wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (~ 135 °C) durchgeführt.

Viskositätszahl

Die Bestimmung der Viskositätszahl wird nach DIN 53 728, Blatt 4, durchgeführt.

Schmelzflußindex

Der Schmelzflußindex wurde nach DIN 53 735 bei 21,6 N Belastung und 230 °C gemessen.

Schmelzpunkt

DSC-Messung, Maximum der Schmelzkurve, Aufheizgeschwindigkeit 20 °K/min.

Trübung

Die Trübung der Folie wurde nach ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 $N/mm^2$ (Gerät: Brugger Typ NDS, einseitig beheizte Siegelbacke) versiegelt. Die Siegelnahtfestigkeit wurde nach der T-Peel-Methode bestimmt.

Hot-Tack

"Hot-Tack" bezeichnet die Festigkeit einer noch heißen Siegelnaht unmittelbar nach dem Öffnen der Siegelwerkzeuge. Zur Bestimmung werden zwei Folienzuschnitte von 5·30 mm übereinandergelegt und an den Enden mit einem Klammergewicht G von 100 g fixiert. Ein Flachspatel wird zwischen die Folienlagen gesteckt, und der Meßstreifen wird über zwei Umlenkrollen zwischen die Siegelbacken geführt. Anschließend wird die Siegelung ausgelöst, wobei der Spatel zwischen den Lagen herausgezogen wird, sobald die Siegelbacken geschlossen sind. Als Siegelbedingungen werden 150 °C für die Siegeltemperatur, 0,5 s für die Siegelzeit und 30 N/cm$^2$ für den Anpreßdruck eingestellt. Nach Ende der Siegelzeit von 0,5 s öffnen sich die Siegelbacken (Fläche: 20 cm$^2$) selbständig, und der gesiegelte Meßstreifen wird durch das Belastungsgewicht ruckartig bis zur Umlenkrolle vorgezogen und dabei unter einem Trennwinkel von 180° gespalten. Als Hot-Tack wird die Tiefe der Delaminierung der Siegelnaht in mm angegeben. die sie bei der vorgegebenen Krafteinwirkung erfährt.

Oberflächenspannung

Die Oberflächenspannung wurde mittels der sogenannten Tintenmethode (DIN 53 364) bestimmt.

Druckfarbenhaftung /Metallhaftung

Die coronabehandelten Folien wurden 14 Tage nach ihrer Produktion (Kurzzeitbeurteilung) bzw. 6 Monate nach ihrer Produktion (Langzeitbeurteilung) bedruckt bzw. metallisiert. Die Farb- bzw. Metallhaftung wurde mittels Klebebandtest beurteilt. Konnte mittels Klebeband keine Farbe bzw. kein Metall abgelöst werden, so wurde die Haftung mit sehr gut und bei deutlicher Ablösung von Farbe bzw. Metall mit schlecht beurteilt.

Bestimmung der Siegelanspringtemperatur (MST)

Mit dem Siegelgerät HSG/ET der Firma Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Statistischer Ethylengehalt

Der statistische Ethylengehalt des Copolymeren wurde mittels IR-Spektroskopie bestimmt. Hierbei wurden an ca. 350 µm dicken Preßplatten die Extinktionen pro mm bei 732 cm$^{-1}$ gemessen. Die Zuordnung der Extinktionen pro mm zu Ethylengehalten wurde mit Hilfe einer Eichkurve vorgenommen, welche auf $^{13}$C-NMR-Daten basiert. Der Randomfaktor R ist definiert als das Verhältnis der Extinktionen pro mm bei 720 cm$^{-1}$ und 732 cm$^{-1}$.

$$R = \frac{E_{(720\ cm^{-1})}}{E_{(732\ cm^{-1})}}$$

TABELLE 2

| | Vergleichsbeispiel 1 | Vergleichsbeisplel 2 | Beispiel 1 |
|---|---|---|---|
| Trübung ASTM-D 1003-52 | 2,2-2,5 | 1,9-2,2 | 1,7-2,0 |
| Glanz (20°) DIN 67 530 | 101 | 90 | 105 |
| Glanz (60°) DIN 67 530 | 125 | 120 | 136 |
| Oberflächenspannung 15 W min/m$^2$ Dosis, gemessen nach 1 Tag [mN/m] | 47 | 44 | 50 |
| Minimale Siegeltemperatur MST (10 N/cm$^2$; 0,5 s) [°C] ohne Coronabehandlung 15 Wmin/m$^2$ Dosis | 114 | 104 | 106 |

TABELLE 2 (fortgesetzt)

| | Vergleichsbeispiel 1 | Vergleichsbeisplel 2 | Beispiel 1 |
|---|---|---|---|
| Minimale Slegeltemperatur MST (10 N/cm$^2$; 0,5 s) [°C] mit Coronabehandlung 15 Wmin/m$^2$ Dosis | 116 | 112 | 108 |
| Hot-Tack (ohne Coronabehandlung) (150 °C; 30 N/cm$^2$; 0,5 s) [mm] | 6 | 6 | 6 |
| Siegeinahtfestigkeit HST (130 °C; 10 N/cm$^2$; 0,5 s) [N/15 mm] ohne Coronabehandlung | 2,4 | 2,5 | 2,5 |
| Siegeinahtfestigkeit HST (130 °C; 10 N/cm$^2$; 0,5 s) [N/15 mm] mit Coronabehandlung Dosis 15Wmin/m$^2$ | 2,3 | 2,3 | 2,5 |
| Foliendicke [µm] | 20,1 | 19.8 | 20,7 |
| Schichtdicke A [µm] | 1,0 | 1,1 | 1,1 |
| Druckfarbenhaflung | gut | mäßig | sehr gut |
| Metallhaftung | mäßig | schlecht | sehr gut |

TABELLE 3

| | Vergleichsbeispiel 1 | Verglelchsbeispiel 2 | Beispiel 2 |
|---|---|---|---|
| Trübung ASTM-D 1003-52 | 2,2-2,5 | 1,9-2,2 | 1,5-1,9 |
| Glanz (20°) DIN 67 530 | 101 | 90 | 123 |
| Glanz (60°) DIN 67 530 | 125 | 120 | 149 |
| Oberflächenspannung 15 W min/m$^2$ Dosis, gemessen nach 1 Tag [mN/m] | 47 | 44 | 49 |
| Minimale Siegeltemperatur MST (10 N/cm$^2$; 0,5 s) [°C] ohne Coronabehandlung 15 Wmin/m$^2$ Dosis | 114 | 104 | 108 |
| Minimale Siegeltemperatur MST (10 N/cm$^2$; 0,5 s) [°C] mit Coronabehandlung 15 Wmin/m$^2$ Dosis | 116 | 112 | 114 |
| Hot-Tack (ohne Coronabehandlung) (150 °C; 30 N/cm$^2$; 0,5 s) [mm] | 6 | 6 | 6 |
| Siegelnahtfestigkeit HST (130 °C; 10 N/cm$^2$; 0,5 s) [N/15 mm] ohne Coronabehandlung | 2,4 | 2,5 | 2,3 |
| Siegelnahtfestigkeit HST (130 °C: 10 N/cm$^2$; 0,5 s) [N/15 mm] mit Coronabehandlung Dosis 15Wmin/m$^2$ | 2,3 | 2,3 | 2,2 |
| Foliendicke [µm] | 20,1 | 19,8 | 19,9 |
| Schichtdicke A [µm] | 1,0 | 1,1 | 1,1 |
| Druckfarbenhaftung | gut | mäßig | sehr gut |
| Metallhaftung | mäßig | schlecht | sehr gut |

TABELLE 4

| | Vergleichsbeispiel 1 | Vergleichsbeispiel 2 | Beispiel 3 |
|---|---|---|---|
| Trübung ASTM-D 1003-52 | 2,2-2,5 | 1,9-2,2 | 1,5-1,8 |
| Glanz (20°) DIN 67 530 | 101 | 90 | 127 |
| Glanz (60°) DIN 67 530 | 125 | 120 | 148 |

TABELLE 4 (fortgesetzt)

| | Vergleichsbeispiel 1 | Vergleichsbeispiel 2 | Beispiel 3 |
|---|---|---|---|
| Oberflächenspannung 15 W min/m$^2$ Dosis, gemessen nach 1 Tag [mN/m] | 47 | 44 | 49 |
| Minimale Siegeltemperatur MST (10 N/cm$^2$; 0,5 s) [°C] ohne Coronabehandlung 15 Wmin/m$^2$ Dosis | 114 | 104 | 106 |
| Minimale Siegeltemperatur MST (10 N/cm$^2$; 0,5 s) [°C] mit Coronabehandlung 15 Wmin/m$^2$ Dosis | 116 | 112 | 112 |
| Hot-Tack (ohne Coronabehandlung) (150 °C; 30 N/cm$^2$; 0,5 s) [mm] | 6 | 6 | 5 |
| Siegelnahtfestigkeit HST (130 °C; 10 N/cm$^2$; 0,5 s) [N/15 mm] ohne Coronabehandlung | 2,4 | 2,5 | 2,5 |
| Siegelnahtfestigkeit HST (130 °C; 10 N/cm$^2$; 0,5 s) [N/15 mm] mit Coronabehandlung Dosis 15Wmin/m$^2$ | 2,3 | 2,3 | 2,5 |
| Follendicke [µm] | 20,1 | 19,8 | 19,6 |
| Schichtdicke A [µm] | 1,0 | 1,1 | 1,1 |
| Druckfarbenhaftung | gut | mäßig | sehr gut |
| Metallhaftung | mäßig | schlecht | sehr gut |

TABELLE 5

| | Vergleichsbeispiel 1 | Vergleichsbelspiel 2 | Beispiel 4 |
|---|---|---|---|
| Trübung ASTM-D 1003-52 | 2,2-2,5 | 1,9-2,2 | 1,4-1,8 |
| Glanz (20°) DIN 67 530 | 101 | 90 | 121 |
| Glanz (60°) DIN 67 530 | 125 | 120 | 150 |
| Oberflächenspannung 15 W min/m$^2$ Dosis, gemessen nach 1 Tag [mN/m] | 47 | 44 | 48 |
| Minimale Siegeltemperatur MST (10 N/cm$^2$; 0,5 s) [°C] ohne Coronabehandlung 15 Wmin/m$^2$ Dosis | 114 | 104 | 112 |
| Minimale Siegeltemperatur MST (10 N/cm$^2$; 0,5 s) [°C] mit Coronabehandlung 15 Wmin/m$^2$ Dosis | 116 | 112 | 116 |
| Hot-Tack (ohne Coronabehandlung) (150 °C; 30 N/cm$^2$; 0,5 s) [mm] | 6 | 6 | 6 |
| Siegelnahtfestigkeit HST (130 °C; 10 N/cm$^2$; 0,5 s) [N/15 mm] ohne Coronabehandlung | 2,4 | 2,5 | 2,3 |
| Siegelnahtfestigkeit HST (130 °C; 10 N/cm$^2$; 0,5 s) [N/15 mm] mit Coronabehandlung Dosis 15Wmin/m$^2$ | 2,3 | 2,3 | 2,3 |
| Foliendicke [µm] | 20,1 | 19,8 | 20,0 |
| Schlchtdicke A [µm] | 1,0 | 1,1 | 1,1 |
| Druckfarbenhaftung | gut | mäßig | sehr gut |
| Metallhaftung | mäßig | schlecht | sehr gut |

TABELLE 6

| | Vergleichsbeispiel 1 | Vergleichsbeispiel 2 | beispiel 5 |
|---|---|---|---|
| Trübung ASTM-D 1003-52 | 2,2-2,5 | 1,9-2,2 | 1,6-1,8 |
| Glanz (20°) DIN 67 530 | 101 | 90 | 131 |
| Glanz (60°) DIN 67 530 | 125 | 120 | 156 |
| Oberflächenspannung 15 W min/m$^2$ Dosis, gemessen nach 1 Tag [mN/m] | 47 | 44 | 48 |
| Minimale Siegeltemperatur MST (10 N/cm$^2$; 0,5 s) [°C] ohne Coronabehandlung 15 Wmin/m$^2$ Dosis | 114 | 104 | 106 |
| Minimale Siegeltemperatur MST (10 N/cm$^2$; 0,5 s) [°C] mit Coronabehandlung 15 Wmin/m$^2$ Dosis | 116 | 112 | 116 |
| Hot-Tack (ohne Coronabehandlung) (150 °C; 30 N/cm$^2$; 0,5 s) [mm] | 6 | 6 | 7 |
| Siegelnahtfestigkeit HST (130 °C; 10 N/cm$^2$; 0,5 s) [N/15 mm] ohne Coronabehandlung | 2,4 | 2,5 | 2,7 |
| Siegelnahtfestigkeit HST (130 °C; 10 N/cm$^2$; 0.5 s) [N/15 mm] mit Coronabehandlung Dosis 15Wmin/m$^2$ | 2,3 | 2,3 | 2,0 |
| Foliendicke [µm] | 20,1 | 19,8 | 19,6 |
| Schichtdicke A [µm] | 1,0 | 1,1 | 1,1 |
| Druckfarbenhaflung | gut | mäßig | sehr gut |
| Metallhaftung | mäßig | schlecht | sehr gut |

TABELLE 7

| | Vergleichsbeispiel 1 | Vergleichsbeispiel 2 | Beispiel 6 |
|---|---|---|---|
| Trübung ASTM-D 1003-52 | 2,2-2,5 | 1,9-2,2 | 1,3-1,6 |
| Glanz (20°) DIN 67 530 | 101 | 90 | 130 |
| Glanz (60°) DIN 67 530 | 125 | 120 | 155 |
| Oberflächenspannung 15 W min/m$^2$ Dosis, gemessen nach 1 Tag [mN/m] | 47 | 44 | 47 |
| Minimale Siegeltemperatur MST (10 N/cm$^2$; 0,5 s) [°C] ohne Coronabehandlung 15 Wmin/m$^2$ Dosis | 114 | 104 | 110 |
| Minimale Siegeltemperatur MST (10 N/cm$^2$; 0.5 s) [°C] mit Coronabehandlung 15 Wmin/m$^2$ Dosis | 116 | 112 | 116 |
| Hot-Tack (ohne Coronabehandlung) (150 °C; 30 N/cm$^2$; 0.5 s) [mm] | 6 | 6 | 4 |
| Siegelnahtfestigkeit HST (130 °C; 10 N/cm$^2$; 0,5 s) [N/15 mm] ohne Coronabehandlung | 2,4 | 2,5 | 2,8 |
| Siegelnahtfestigkeit HST (130 °C; 10 N/cm$^2$; 0,5 s) [N/15 mm] mit Coronabehandlung Dosis 15Wmin/m$^2$ | 2,3 | 2,3 | 2,2 |
| Foliendicke [µm] | 20,1 | 19,8 | 19,5 |
| Schichtdicke A [µm] | 1,0 | 1,1 | 1,1 |
| Druckfarbenhaftung | gut | mäßig | sehr gut |
| Metallhaftung | mäßig | schlecht | sehr gut |

## TABELLE 8

| | Beispiel 1 | Vergleichsbeispiel 1 | Vergleichsbeispiel 2 |
|---|---|---|---|
| Basisschicht B: | isotaktisches Polypropylen | Polypropylen | Polypropylen |
| Deckschichten A: | statistisches Ethylen-Propylen-Copolymer: | statistisches Ethylen-Propylen-Copolymer | statistisches Ethylen-Propylen-Butylen-Terpolymer |
| | $C_2$-Gehalt: 3,0 Gew.-% | $C_2$-Gehalt: 3-4 Gew.-% | $C_2$-Gehalt: 1,5-2,5 Gew.-%<br>$C_4$-Gehalt: 7-10 Gew.-% |
| mittlere Molmasse $M_w$ [g/mol]: | $2{,}4 \cdot 10^5$ | $2{,}8 \cdot 10^5$ | $3{,}1 \cdot 10^5$ |
| mittlere Molmasse $M_n$ [g/mol]: | $1{,}2 \cdot 10^5$ | $7{,}4 \cdot 10^4$ | $5{,}85 \cdot 10^4$ |
| Molmassen-Dispersität $M_w/M_n$: | 2,0 | 3,8 | 5,3 |
| Schmelzpunkt nach DSC [° C]: | 128 | 135 | 135 |
| Schmelzflußindex MFI (230 °C, 21,6 N) nach DIN 53 735 [g/10 min]: | 6,0 | 7,0 | 6,0 |
| Viskositätszahl VZ [$cm^3$/g]: | 203 | 210 | 225 |
| peroxidischer Abbau: | nein | ja | nein |
| Folienaufbau | ABA | ABA | ABA |
| Foliendicke: | ~20 μm | ~20 μm | ~20 μm |
| Deckschichtdicke: | 1,1 μm | 1,0 μm | 1,1 μm |

## TABELLE 9

| Beispiel 2 | | Vergleichsbeispiel 1 | Vergleichsbeispiel 2 |
|---|---|---|---|
| Basisschicht B:<br>isotaktisches Polypropylen | | Basisschicht B:<br>Polypropylen | Basisschicht B:<br>Polypropylen |
| Deckschichten A:<br>statistisches Ethylen-Propylen-Copolymer: | | Deckschichten A:<br>statistisches Ethylen-Propylen-Co-polymer | Deckschichten A:<br>statistisches Ethylen-Propylen-Butylen-Terpolymer |
| $C_2$-Gehalt: 5,0 Gew.-% | | $C_2$-Gehalt: 3-4 Gew.-% | $C_2$-Gehalt: 1,5-2,5 Gew.-%<br>$C_4$-Gehalt: 7-10 Gew.-% |
| mittlere Molmasse $M_w$ [g/mol]: | $1{,}96 \cdot 10^5$ | $2{,}8 \cdot 10^5$ | $3{,}1 \cdot 10^5$ |
| mittlere Molmasse $M_n$ [g/mol]: | $0{,}83 \cdot 10^5$ | $7{,}4 \cdot 10^4$ | $5{,}85 \cdot 10^4$ |
| Molmassen-Dispersität $M_w/M_n$: | 2,4 | 3,8 | 5,3 |
| Schmelzpunkt nach DSC [° C]: | 123,9 | 135 | 135 |
| Schmelzflußindex MFI (230 °C, 21,6 N) nach DIN 53 735 [g/10 min]: | 9,0 | 7,0 | 6,0 |
| Viskositätszahl VZ [$cm^3$/g]: | 185 | 210 | 225 |
| peroxidischer Abbau: | nein | ja | nein |
| Folienaufbau ABA | | Folienaufbau ABA | Folienaufbau ABA |
| Foliendicke: ~20 µm | | Foliendicke: ~20 µm | Foliendicke: ~20 µm |
| Deckschichtdicke:<br>1,1 µm | | Deckschichtdicke:<br>1,0 µm | Deckschichtdicke:<br>1,1 µm |

## TABELLE 10

| | Beispiel 3 | Vergleichsbeispiel 1 | Vergleichsbeispiel 2 |
|---|---|---|---|
| Basisschicht B: isotaktisches Polypropylen | | Basisschicht B: Polypropylen | Basisschicht B: Polypropylen |
| Deckschichten A: statistisches Ethylen-Propylen-Copolymer: | | Deckschichten A: statistisches Ethylen-Propylen-Copolymer | Deckschichten A: statistisches Ethylen-Propylen-Butylen-Terpolymer |
| $C_2$-Gehalt: 5,0 Gew.-% | | $C_2$-Gehalt: 3-4 Gew.-% | $C_2$-Gehalt: 1,5-2,5 Gew.-%<br>$C_4$-Gehalt: 7-10 Gew.-% |
| mittlere Molmasse $M_w$ [g/mol]: | $1,6 \cdot 10^5$ | $2,8 \cdot 10^5$ | $3,1 \cdot 10^5$ |
| mittlere Molmasse $M_n$ [g/mol]: | $0,62 \cdot 10^5$ | $7,4 \cdot 10^4$ | $5,85 \cdot 10^4$ |
| Molmassen-Dispersität $M_w/M_n$: | 2,6 | 3,8 | 5,3 |
| Schmelzpunkt nach DSC [° C]: | 121,6 | 135 | 135 |
| Schmelzflußindex MFI (230 °C, 21,6 N) nach DIN 53 735 [g/10 min]: | 19,0 | 7,0 | 6,0 |
| Viskositätszahl VZ [$cm^3$/g]: | 165 | 210 | 225 |
| peroxidischer Abbau: | nein | ja | nein |
| Folienaufbau ABA | | Folienaufbau ABA | Folienaufbau ABA |
| Foliendicke: ~20 μm | | Foliendicke: ~20 μm | Foliendicke: ~20 μm |
| Deckschichtdicke: 1,1 μm | | Deckschichtdicke: 1,0 μm | Deckschichtdicke: 1,1 μm |

## TABELLE 11

| | Beispiel 4 | Vergleichsbeispiel 1 | Vergleichsbeispiel 2 |
|---|---|---|---|
| Basisschicht B: | isotaktisches Polypropylen | Basisschicht B: Polypropylen | Basisschicht B: Polypropylen |
| Deckschichten A: | statistisches Ethylen-Propylen-Copolymer: | Deckschichten A: statistisches Ethylen-Propylen-Copolymer | Deckschichten A: statistisches Ethylen-Propylen-Butylen-Terpolymer |
| | $C_2$-Gehalt: 5,0 Gew.-% | $C_2$-Gehalt: 3-4 Gew.-% | $C_2$-Gehalt: 1,5-2,5 Gew.-%<br>$C_4$-Gehalt: 7-10 Gew.-% |
| mittlere Molmasse $M_w$ [g/mol]: | $2{,}0 \cdot 10^5$ | $2{,}8 \cdot 10^5$ | $3{,}1 \cdot 10^5$ |
| mittlere Molmasse $M_n$ [g/mol]: | $0{,}48 \cdot 10^5$ | $7{,}4 \cdot 10^4$ | $5{,}85 \cdot 10^4$ |
| Molmassen-Dispersität $M_w/M_n$: | 4,3 | 3,8 | 5,3 |
| Schmelzpunkt nach DSC [° C]: | 128,2 | 135 | 135 |
| Schmelzflußindex MFI (230 °C, 21,6 N) nach DIN 53 735 [g/10 min]: | 11 | 7,0 | 6,0 |
| Viskositätszahl VZ [$cm^3$/g]: | 180 | 210 | 225 |
| peroxidischer Abbau: | nein | ja | nein |
| Folienaufbau | ABA | Folienaufbau ABA | Folienaufbau ABA |
| Foliendicke: | ~20 µm | Foliendicke: ~20 µm | Foliendicke: ~20 µm |
| Deckschichtdicke: | 1,1 µm | Deckschichtdicke: 1,0 µm | Deckschichtdicke: 1,1 µm |

## TABELLE 12

| Beispiel 5 | | Vergleichsbeispiel 1 | Vergleichsbeispiel 2 |
|---|---|---|---|
| Basisschicht B:<br>isotaktisches Polypropylen | | Basisschicht B:<br>Polypropylen | Basisschicht B:<br>Polypropylen |
| Deckschichten A:<br>statistisches Ethylen-Propylen-Copolymer: | | Deckschichten A:<br>statistisches Ethylen-Propylen-Copolymer | Deckschichten A:<br>statistisches Ethylen-Propylen-Butylen-Terpolymer |
| $C_4$-Gehalt: 9,0 Gew.-% | | $C_2$-Gehalt: 3-4 Gew.-% | $C_2$-Gehalt: 1,5-2,5 Gew.-%<br>$C_4$-Gehalt: 7-10 Gew.-% |
| mittlere Molmasse $M_w$ [g/mol]: | $2{,}3 \cdot 10^5$ | $2{,}8 \cdot 10^5$ | $3{,}1 \cdot 10^5$ |
| mittlere Molmasse $M_n$ [g/mol]: | $1{,}0 \cdot 10^5$ | $7{,}4 \cdot 10^4$ | $5{,}85 \cdot 10^4$ |
| Molmassen-Dispersität $M_w/M_n$: | 2,3 | 3,8 | 5,3 |
| Schmelzpunkt nach DSC [° C]: | 132 | 135 | 135 |
| Schmelzflußindex MFI (230 °C, 21,6 N) nach DIN 53 735 [g/10 min]: | 6,4 | 7,0 | 6,0 |
| Viskositätszahl VZ [$cm^3$/g]: | 217 | 210 | 225 |
| peroxidischer Abbau: | nein | ja | nein |
| Folienaufbau ABA | | Folienaufbau ABA | Folienaufbau ABA |
| Foliendicke: ~20 μm | | Foliendicke: ~20 μm | Foliendicke: ~20 μm |
| Deckschichtdicke:<br>1,1 μm | | Deckschichtdicke:<br>1,1 μm | Deckschichtdicke:<br>1,1 μm |

# TABELLE 13

| Beispiel 6 | | Vergleichsbeispiel 1 | Vergleichsbeispiel 2 |
|---|---|---|---|
| Basisschicht B:<br>isotaktisches Polypropylen | | Basisschicht B:<br>Polypropylen | Basisschicht B:<br>Polypropylen |
| Deckschichten A:<br>statistisches Ethylen-Propylen-Copolymer: | | Deckschichten A:<br>statistisches Ethylen-Propylen-Co-polymer | Deckschichten A:<br>statistisches Ethylen-Propylen-Butylen-Terpolymer |
| $C_6$-Gehalt: 3,0 Gew.-% | | $C_2$-Gehalt: 3-4 Gew.-% | $C_2$-Gehalt: 1,5-2,5 Gew.-%<br>$C_4$-Gehalt: 7-10 Gew.-% |
| mittlere Molmasse $M_w$ [g/mol]: | $2{,}6 \cdot 10^5$ | $2{,}8 \cdot 10^5$ | $3{,}1 \cdot 10^5$ |
| mittlere Molmasse $M_n$ [g/mol]: | $1{,}2 \cdot 10^5$ | $7{,}4 \cdot 10^4$ | $5{,}85 \cdot 10^4$ |
| Molmassen-Dispersität $M_w/M_n$: | 2,2 | 3,8 | 5,3 |
| Schmelzpunkt nach DSC [° C]: | 129 | 135 | 135 |
| Schmelzflußindex MFI (230 °C, 21,6 N) nach DIN 53 735 [g/10 min]: | 4,3 | 7,0 | 6,0 |
| Viskositätszahl VZ [$cm^3$/g]: | 225 | 210 | 225 |
| peroxidischer Abbau: | nein | ja | nein |
| Folienaufbau ABA | | Folienaufbau ABA | Folienaufbau ABA |
| Foliendicke: ~20 μm | | Foliendicke: ~20 μm | Foliendicke: ~20 μm |
| Deckschichtdicke:<br>1,1 μm | | Deckschichtdicke:<br>1,1 μm | Deckschichtdicke:<br>1,1 μm |

TABELLE 14

| Zeitabhängigkeit der Oberflächenspannung coronabehandelter 3-Schichtfolien mit Deckschichten des Vergleichsbeispiels 1, Vergleichsbeispiels 2 und der Beispiele 1 bis 6 | | | |
|---|---|---|---|
| Oberflächenspannung [mN/m] | 1. Tag | 4. Woche | 20. Woche |
| Vergleichsbeispiel 1 | 47 | 40 | 38 |
| Vergleichsbeispiel 2 | 44 | 38 | 36 |
| Beispiel 1 | 50 | 43 | 43 |
| Beispiel 2 | 49 | 44 | 43 |
| Beispiel 3 | 49 | 45 | 43 |
| Beispiel 4 | 48 | 43 | 42 |
| Beispiel 5 | 48 | 42 | 41 |
| Beispiel 6 | 47 | 43 | 42 |

Coronadosis: 15 $Wmin/m^2$

**Patentansprüche**

1. Siegelbare Mehrschichtfolie aus einer polyolefinischen Basisschicht und mindestens einer Deckschicht, **dadurch gekennzeichnet, daß** die Deckschicht ein Propylen-Olefin-Copolymerisat enthält, welches mittels zu isotaktischen Polypropylenen führenden Metallocenkatalysatoren hergestellt ist, daß das Copolymer ein statistisches Copolymer ist, daß das Verhältnis von Blockanteil zu statistischem Anteil des Copolymeren, gemessen als Randomfaktor mittels IR, im Bereich von 0,01 bis 0,4 liegt und daß der statistische Comonomergehalt des Copolymeren, gemessen mittels IR, 0,05 bis 12 Gew.-% beträgt.

2. Mehrschichtfolie nach Anspruch 1, **dadurch gekennzeichnet, daß** der Comonomergehalt des Copolymeren 0,1 bis 10 Gew.-%, vorzugsweise 1 bis 7 Gew.-%, beträgt.

3. Mehrschichtfolie nach Anspruch 1, **dadurch gekennzeichnet, daß** das Comonomere Ethylen ist.

4. Mehrschichtfolie nach Anspruch 1, **dadurch gekennzeichnet, daß** die mittlere Molmasse $M_w$ (Gewichtsmittel) des Copolymeren im Bereich von $5 \cdot 10^4$ bis $2 \cdot 10^6$ g/mol liegt.

5. Mehrschichtfolie nach Anspruch 1, **dadurch gekennzeichnet, daß** die mittlere Molmasse $M_n$ (Zahlenmittel) des Copolymeren im Bereich von $5 \cdot 10^4$ bis $1 \cdot 10^6$ g/mol liegt.

6. Mehrschichtfolie nach Anspruch 1, **dadurch gekennzeichnet, daß** die Molmassen-Dispersität des Copolymeren $M_w/M_n$ <7 beträgt.

7. Mehrschichtfolie nach Anspruch 1, **dadurch gekennzeichnet, daß** der Schmelzpunkt des Copolymeren nach DSC 100 bis 145 °C beträgt.

8. Mehrschichtfolie nach Anspruch 1, **dadurch gekennzeichnet, daß** der Schmelzflußindex MFI nach DIN 53 735 0,5 bis 100 g/10 min (230 °C, 21,6 N) beträgt.

9. Mehrschichtfolie nach Anspruch 1, **dadurch gekennzeichnet, daß** die mit n-Hexan extrahierbaren Anteile (nach FDA 1771520) des Copolymeren <3 Gew.-% sind.

10. Mehrschichtfolie nach Anspruch 1, **dadurch gekennzeichnet, daß** die Viskositätszahl VZ im Bereich von 50 bis 1 000 $cm^3/g$ liegt.

11. Mehrschichtfolie nach zwei oder mehreren der Ansprüche 1 bis 10.

12. Mehrschichtfolie nach einem oder mehreren der Ansprüche 1 bis 11, **dadurch gekennzeichnet, daß** das Propylenhomopolymere der Basisschicht mindestens 90 % Propylen enthält und einen Schmelzflußindex von 0,5 g/10 min bis 8 g/10 min nach DIN 53 735 und einen Schmelzpunkt von 150 bis 170 °C aufweist.

13. Mehrschichtfolie nach einem oder mehreren der Ansprüche 1 bis 12, **dadurch gekennzeichnet, daß** die Basisschicht inerte anorganische und/oder organische Partikel enthält.

14. Mehrschichtfolie nach einem oder mehreren der Ansprüche 1 bis 13, **dadurch gekennzeichnet, daß** die Basisschicht Harz enthält.

15. Mehrschichtfolie nach einem oder mehreren der Ansprüche 1 bis 14, **dadurch gekennzeichnet, daß** die Mehrschichtfolie mindestens dreischichtig ist.

16. Mehrschichtfolie nach einem oder mehreren der Ansprüche 1 bis 15, **dadurch gekennzeichnet, daß** die Deckschicht 0,1 bis 2,5 µm dick ist.

17. Verfahren zur Herstellung der Mehrschichfolie nach Anspruch 1, bei dem die den einzelnen Schichten der Folie entsprechenden Schmelzen durch eine Flachdüse coextrudiert werden, die coextrudierte Folie zur Verfestigung abgekühlt wird, die Folie biaxial gestreckt wird mit einem Längsstreckverhältnis von 4:1 bis 7:1 und einem Querstreckverhältnis von 8:1 bis 10:1, die biaxial gestreckte Folie thermofixiert, gegebenenfalls corona- oder flammbehandelt und anschließend aufgewickelt wird, **dadurch gekennzeichnet, daß** die coextrudierte Folie über eine Abzugswalze, deren Temperatur zwischen 10 und 90 °C liegt, abgezogen wird.

18. Verpackung enthaltend eine Folie nach einem oder mehreren der Ansprüche 1 bis 16.

**Claims**

1. A heat-sealable multilayer film comprising a polyolefinic base layer and at least one outer layer, wherein the outer layer comprises a propylene-olefin copolymer prepared by means of metallocene catalyst which had to isotactic polypropylenes, the copolymer is a random copolymer, the ratio of block fraction to random fraction in the copolymer, measured by IR as random factor, is in the range from 0.01 to 0.4 and the random comonomer content of the copolymer, measured by IR, is from 0.05 to 12% by weight.

2. A multilayer film as claimed in claim 1, wherein the comonomer content of the copolymer is from 0.1 to 10% by weight, preferably from 1 to 7% by weight.

3. A multilayer film as claimed in claim 1, wherein the comonomer is ethylene.

4. A multilayer film as claimed in claim 1, wherein the mean molecular weight $M_w$ (weight average) of the copolymer is in the range from $5 \cdot 10^4$ to $2 \cdot 10^6$ g/mol.

5. A multilayer film as claimed in claim 1, wherein the mean molecular weight $M_n$ (number average) of the copolymer is in the range from $5 \cdot 10^4$ to $1 \cdot 10^6$ g/mol.

6. A multilayer film as claimed in claim 1, wherein the molecular weight dispersity of the copolymer $M_w/M_n$ is < 7.

7. A multilayer film as claimed in claim 1, wherein the DSC melting point of the copolymer is from 100 to 145°C.

8. A multilayer film as claimed in claim 1, wherein the melt flow index MFI, measured in accordance with DIN 53 735, is from 0.5 to 100 g/10 min (230°C, 21.6 N).

9. A multilayer film as claimed in claim 1, wherein the n-hexane-extractable content (measured in accordance with FDA 1771520) of the copolymer is < 3% by weight.

10. A multilayer film as claimed in claim 1, wherein the viscosity number VN is in the range from 50 to 1,000 $cm^3$/g.

**11.** A multilayer film as claimed in two or more of claims 1 to 10.

**12.** A multilayer film as claimed in one or more of claims 1 to 11, wherein the propylene homopolymer of the base layer comprises at least 90% of propylene and has a melt flow index of from 0.5 g/10 min to 8 g/10 min, measured in accordance with DIN 53 735, and a melting point of from 150 to 170°C.

**13.** A multilayer film as claimed in one or more of claims 1 to 12, wherein the base layer comprises inert inorganic and/or organic particles.

**14.** A multilayer film as claimed in one or more of claims 1 to 13, wherein the base layer comprises resin.

**15.** A multilayer film as claimed in one or more of claims 1 to 14, wherein the multilayer film has at least three layers.

**16.** A multilayer film as claimed in one or more of claims 1 to 15, wherein the outer layer has a thickness of from 0.1 to 2.5 µm.

**17.** A process for the production of a multilayer film as claimed in claim 1, in which the melts corresponding to the individual layers of the film are coextruded through a flat-film die, the coextruded film is cooled for solidification, the film is biaxially stretched at the longitudinal stretching ratio of from 4:1 to 7:1 and a transverse stretching ratio of from 8:1 to 10:1, the biaxially stretched film is heat-set, if desired corona-or flame-treated and subsequently wound up, which comprises taking off the coextruded film over a take-off roll whose temperature is between 10 and 90°C.

**18.** Packaging containing a film as claimed in one or more of claims 1 to 16.

**Revendications**

**1.** Feuille multicouche scellable composée d'une couche de base polyoléfinique et d'au moins une couche de revêtement, **caractérisée en ce que** la couche de revêtement contient un copolymère propylène/oléfine, lequel est préparé à l'aide de catalyseurs de métallocène donnant un polypropylène isotactique, **en ce que** le copolymère est un copolymère statistique, **en ce que** le rapport de la partie séquencée à la partie statistique du copolymère, calculé en tant que facteur aléatoire au moyen des IR, est de l'ordre de 0,01 à 0,4 et **en ce que** la teneur en comonomère du copolymère, calculée au moyen des IR, est de 0,05 à 12% en poids.

**2.** Feuille multicouche selon la revendication 1, **caractérisée en ce que** la teneur en comonomère du copolymère est de 0,1 à 10% en poids, de préférence de 1 à 7% en poids.

**3.** Feuille multicouche selon la revendication 1, **caractérisée en ce que** le comonomère est l'éthylène.

**4.** Feuille multicouche selon la revendication 1, **caractérisée en ce que** la masse moléculaire moyenne $M_m$ (moyenne en poids) du copolymère est de l'ordre de $5.10^4$ à $2.10^6$ g/mole.

**5.** Feuille multicouche selon la revendication 1, **caractérisée en ce que** la masse moléculaire moyenne $M_n$ (moyenne en nombre) du copolymère est de l'ordre de $5.10^4$ à $1.10^6$ g/mole.

**6.** Feuille multicouche selon la revendication 1, **caractérisée en ce que** la polymolécularité du copolymère $M_m/M_n$ est inférieure à 7.

**7.** Feuille multicouche selon la revendication 1, **caractérisée en ce que** le point de fusion du copolymère déterminé par DSC est compris entre 100°C et 145°C.

**8.** Feuille multicouche selon la revendication 1, **caractérisée en ce que** l'indice d'écoulement en fusion MFI selon la norme DIN 53 735 est de 0,5 à 100 g/10 min (230°C, 21,6 N).

**9.** Feuille multicouche selon la revendication 1, **caractérisée en ce que** la partie extractible avec le n-hexane (selon FDA 1771520) du copolymère est inférieure à 3% en poids.

**10.** Feuille multicouche selon la revendication 1, **caractérisée en ce que** l'indice de viscosité VZ est de l'ordre de 50 à 1000 $cm^3/g$.

**11.** Feuille multicouche selon deux ou plusieurs des revendications 1 à 10.

**12.** Feuille multicouche selon une ou plusieurs des revendications 1 à 11, **caractérisée en ce que** l'homopolymère de propylène de la couche de base contient au moins 90% de propylène et présente un indice d'écoulement en fusion allant de 0,5 g/10 min à 8 g/10 min selon la norme DIN 53 735 et un point de fusion allant de 150°C à 170°C.

**13.** Feuille multicouche selon une ou plusieurs des revendications 1 à 12, **caractérisée en ce que** la couche de base comprend des particules inorganiques et/ou organiques inertes.

**14.** Feuille multicouche selon une ou plusieurs des revendications 1 à 13, **caractérisée en ce que** la couche de base contient une résine.

**15.** Feuille multicouche selon une ou plusieurs des revendications 1 à 14, **caractérisée en ce que** la feuille multicouche est composée d'au moins trois couches.

**16.** Feuille multicouche selon une ou plusieurs des revendications 1 à 15, **caractérisée en ce que** la couche de revêtement a une épaisseur de 0,1 µm à 2,5 µm.

**17.** Procédé de fabrication de la feuille multicouche selon la revendication 1, dans lequel les matières fondues correspondant aux couches individuelles de la feuille sont co-extrudées au moyen d'une filière pour feuilles, la feuille co-extrudée est refroidie jusqu'à solidification, la feuille est étirée biaxialement avec un rapport longitudinal de 4:1 à 7:1 et un rapport transversal de 8:1 à 10:1, la feuille étirée biaxialement est thermofixée, éventuellement traitée par traitement Corona ou à la flamme, et ensuite enroulée, **caractérisé en ce que** la feuille co-extrudée est extraite au moyen d'un cylindre enrouleur, dont la température est comprise entre 10°C et 90°C.

**18.** Emballage contenant une feuille selon une ou plusieurs des revendications 1 à 16.